# EUROPÄISCHE PATENTSCHRIFT

(11) **EP 0 918 684 B1**
(45) Veröffentlichungstag und Bekanntmachung des Hinweises auf die Patenterteilung: **26.04.2000**
(21) Anmeldenummer: 97935351.3
(22) Anmeldetag: 14.08.1997
(51) Int. Cl.: B62K 15/00

(54) **KLAPPFAHRRAD**
COLLAPSIBLE BIKE
VELO PLIABLE

(30) Priorität: 14.08.1996 AT 147196
(43) Veröffentlichungstag der Anmeldung: 02.06.1999
(73) Patentinhaber: Koppensteiner, Christian, 2380 Perchtoldsdorf (AT)
(72) Erfinder: Koppensteiner, Christian, 2380 Perchtoldsdorf (AT)
(74) Vertreter: Cunow, Gerda
(86) Internationale Anmeldenummer: AT9700188
(87) Internationale Veröffentlichungsnummer: WO9806621

(56) Entgegenhaltungen:
- WO-A-86/05155
- DE-A- 4 423 647
- GB-A- 2 287 438

## Beschreibung

Die vorliegende Erfindung bezieht sich auf ein Fahrrad mit an einem Rahmen gelagerten Vorder- und Hinterrad, wobei der Rahmen zusammenklappbar ist, wobei in der zusammengeklappten Stellung die Längsabmessungen des Fahrrades gegenüber der Betriebsposition verringert sind und wobei das Hinterrad einseitig am Rahmen und das Vorderrad einseitig an einem das Lenkrad tragenden, am Rahmen drehbar gelagerten Schaftrohr gelagert sind.

Derartige zusammenklappbare Fahrräder, welche beispielsweise auch als Klappräder oder Campingräder oder dgl. bezeichnet werden, sind in unterschiedlichen Ausführungsformen bekannt. Um hiebei in zusammengeklapptem Zustand relativ geringe Außenabmessungen aufzuweisen, sind eine Mehrzahl von bekannten Vorschlägen derartiger zusammenklappbarer Fahrräder mit relativ kleinen Rädern ausgestattet, sodaß zum Erzielen entsprechender Geschwindigkeiten mit zumeist ziemlich großen Antriebsübersetzungen gefahren werden muß, woraus sich naturgemäß Probleme beim Befahren von Steigungen ergeben. Derartige Klappräder waren zumeist mit nur einem entsprechend massiv ausgebildeten, mit einem Gelenk versehenen Rahmenholm ausgestattet, welcher an seinem vorderen Ende eine Lagerung zur Aufnahme des Schaftrohres aufwies und an seinem hinteren Ende in ein Rahmenteil zur Aufnahme der Sattelstange sowie zur Lagerung der Kurbel des Kettenantriebs aufwies.

Darüberhinaus sind beispielsweise aus der DE 44 23 647 A1 Ausbildungen von zusammenklappbaren Fahrrädern bekannt geworden, welche über Räder in mit üblichen Straßenfahrrädern vergleichbarer Größe verfügen und derart einen entsprechenden Fahrkomfort zur Verfügung stellen und auch zum Bewältigen von Steigungen entsprechende Antriebsübersetzungen ermöglichen. Weiters können bei diesen Räder auch entsprechend eine Mehrzahl von Zahnkränzen und Gangschaltungen eingesetzt werden. Für ein Zusammenklappen derartiger Fahrräder mit vergleichsweise großen Vorder- und Hinterrädern ist jedoch üblicherweise ein komplizierter Verschwenk- und Verriegelungsmechanismus vorgesehen, um eine entsprechende Verringerung der Längsabmessungen des Rahmens zu erzielen. Bei der bekannten Ausbildung gemäß der DE 44 23 647 A1 eines Fahrrades mit einem arretierbaren, horizontal und am Rahmen angeordneten Drehgelenk, um dessen Achse die angelenkten Rahmenteile nach Lösen der Arretierung schwenkbar sind, sind die Rahmenteile über ein horizontal ausfahrbares Teleskop und/oder über um eine vertikale Achse schwenkbare Schwingen aus ihrer Lage in einer Ebene parallel zueinander verschiebbar, wobei gemäß dieser DE-A, wie allgemein üblich, darauf abgezielt wird, ein Fahrrad zu schaffen, welches in leicht handhabbarer Weise auf engem Raum untergebracht werden kann und welches eine optimale Rahmensteifigkeit besitzen soll.

Darüberhinaus sind beispielsweise aus der GB-A 2 287 438 klappbare Fahrräder bekanntgworden, deren Räder einen voneinander verschiedenen Durchmesser aufweisen. Bei dieser bekannten Variante eines Klapprades werden für die Lagerung der Räder konventionelle Gabeln vorgesehen, welche die Räder auf beiden Seiten umgreifen, wodurch ein vollständiges Zusammenklappen des Fahrrades, bis die Räder ineinander eintauchen bzw. ein Rad von dem anderen übergriffen wird, nicht möglich ist.

Nachteilig bei sämtlichen der bisher bekannten zusammenklappbaren Fahrradkonstruktionen ist somit die Tatsache, daß zwar eine Verringerung der Längsabmessungen des Fahrrades gegenüber der Betriebs- bzw. Fahrposition desselben erzielbar ist, wobei jedoch diese Fahrräder in zusammengeklapptem Zustand deutlich vergrößerte Abmessungen in ihrer Breite aufweisen, welche vor allem daraus resultieren, daß durch die Lagerung des Vorder- und Hinterrades in entsprechend breiten Gabeln vergleichsweise große Mindestabmessungen in Richtung der Breite des Fahrrades in zusammengeklapptem Zustand unvermeidbar sind. Um eine gewisse Dickenreduktion in zusammengeklapptem Zustand zu erzielen, wurde darüberhinaus bereits vorgeschlagen, wenigstens das Vorderrad aus seiner Gabel zu entfernen, wobei dies naturgemäß mit einem zusätzlichen Arbeitsaufwand verbunden ist und einen getrennten Transport des Vorderrades in zusammengeklapptem Zustand erforderlich macht. Insbesondere durch die durch die Lagerung der Vorder- und Hinterräder in Gabeln hervorgerufene, relativ große Breite des Fahrrades auch in zusammengeklapptem Zustand ergeben sich naturgemäß auch Transportprobleme des zusammengeklappten Fahrrades.

Neben der Ausbildung von Fahrrädern mit zusammenklappbaren Rahmen zur Verringerung der Längsabmessungen des Fahrrades gegenüber der Betriebsposition sind darüberhinaus noch zusätzliche Ausführungen bekannt, wobei durch entsprechendes Aneinanderklappen gelenkig aneinander festgelegter Holme des Rahmens vor allem die Höhenabmessungen des Fahrrades in zusammengeklapptem Zustand verringert werden können. Bei derartigen Konstruktionen resultiert aus dem Zusammenklappen der Fahrradholme zur Verringerung der Höhe naturgemäß eine entsprechende Vergrößerung des gegenseitigen Abstandes zwischen Vorderrad und Hinterrad, sodaß sich auch in diesem Fall Probleme beim Transport oder der Beförderung, insbesondere aus der großen Gesamtlänge des Fahrrades, in zusammengeklapptem Zustand ergeben, wenn auch die Breite des Fahrrades bei entsprechend verstellbarer Lenkstange im wesentlichen auf die Breite der Gabeln zur Lagerung des Vorder- und Hinterrades sowie des Kurbelantriebes beschränkt ist. Naturgemäß können auch bei solchen Konstruktionen nur sehr kleine Räder Verwendung finden, woraus wiederum die oben bereits angeführten Probleme in bezug auf den Fahrkomfort und die Fahreigenschaften, insbesondere bei Bewältigung von Steigungen, resultieren.

Die vorliegende Erfindung zielt nun darauf ab, ein Fahrrad der eingangs genannten Art dahingehend weiterzubilden, daß in zusammengeklapptem Zustand eine möglichst geringe Breite erzielbar ist, wodurch ein einfacherer Transport und eine einfache Beförderung und Handhabung erzielbar werden. Gleichzeitig soll es jedoch bei dem erfindungsgemäßen Fahrrad möglich sein, Räder mit Abmessungen zu verwenden, welche üblichen Straßenrahrrädern entsprechen, um einen entsprechenden Fahrkomfort zu erzielen.

Zur Lösung dieser Aufgabe ist das erfindungsgemäße Fahrrad ausgehend von einem Fahrrad der eingangs genannten Art im wesentlichen dadurch gekennzeichnet, daß die Räder in an sich bekannter Weise unterschiedliche Durchmesser aufweisen, wobei das Rad mit kleinerem Durchmesser in zusammengeklappter Stellung des Rahmens in das Rad mit größerem Durchmesser eintaucht. Durch die vorgesehene, einseitige Lagerung sowohl des Hinterrades am Rahmen als auch des Vorderrades an dem das Lenkrad tragenden, am Rahmen drehbar gelagerten Schaftrohr ergibt sich in einfacher Weise bereits eine entsprecbende Reduktion der Breite des für die Aufhängung der Vorder- und Hinterräder erforderlichen Platzbedarfes, da auf die Breite der Lagerung der Drehachse der Räder in jedem Fall übersteigende Gabelrohren verzichtet werden kann. Dadurch, daß zusätzlich erfindungsgemäß vorgesehen ist, daß die Räder unterschiedliche Durchmesser aufweisen, wobei das Rad mit kleinerem Durchmesser in zusammengeklappter Stellung des Rahmens in das Rad mit größerem Durchmesser eintaucht, ergibt sich in Kombination mit der einseitigen Lagerung der Räder die Möglichkeit einer beträchtlichen Reduktion der Dicke bzw. Breite des Fahrrades in zusammengeklapptem Zustand, da das Rad mit kleinerem Durchmesser vollständig innerhalb der Felge des Rades mit größerem Durchmesser in zusammengeklapptem Zustand aufgenommen werden kann. Zur Erzielung entsprechender Antriebseigenschaften und eines gewissen Fahrkomforts wird hiebei das Hinterrad größer als das Vorderrad ausgebildet sein, sodaß übliche Antriebseinrichtungen und Gangschaltungen verwendet werden können.

Um ein im wesentlichen vollkommenes Eintauchen des Rades mit kleinerem Duchmesser in das Rad mit größerem Durchmesser in zusammengeklapptem Zustand sicherzustellen, ist erfindungsgemäß bevorzugt vorgesehen, daß in an sich bekannter Weise die Räder über an der der einseitigen Lagerung am Rahmen zugewandten Seite an der Felge angreifende, verstärkt ausgebildete Speichen an der Drehachse gelagert sind. Eine derartige Ausbildung ermöglicht nicht nur eine einseitige Lagerung sowohl des Vorderrades als auch des Hinterrades, sondern auch eine asymmetrische Ausbildung der Felge, wobei durch die verstärkt ausgebildeten Speichen eine entsprechende Stabilität erzielt wird, sodaß für die Erzielung der zusammengeklappten Position zur Aufnahme des Rades mit kleinerem Durchmesser tatsächlich im wesentlichen der gesamte Innenraum des Rades mit größerem Durchmesser verbleibt. In diesem Zusammenhang ist darüberhinaus bevorzugt vorgesehen, daß das Hinterrad und das Vorderrad an der Seite der Anordnung der Antriebskette am Rahmen einseitig gelagert sind, um in einfacher Weise eine einfache Aufnahme des Rades mit kleinerem Durchmesser innerhalb des Rades mit größerem Durchmesser sicherzustellen.

Um bei dem erfindungsgemäßen Fahrrad in der zusammengeklappten Position auch beispielsweise für eine einen größeren Platzbedarf aufweisende Gangschaltung Platz zu haben, ist bevorzugt vorgesehen, daß eines der Räder eine von einer Hohlwelle gebildete Lagerung aufweist, in welche in zusammengeklapptem Zustand des Fahrrades die Lagerung des anderen Rades eintaucht.

Gemäß einer weiteren bevorzugten Ausführungsform des erfindungsgemäßen Fahrrades ist die Ausbildung so getroffen, daß in an sich bekannter Weise der Rahmen um in einer im wesentlichen mittigen Position zwischen den Anlenkachsen der Räder an den Holmen des Rahmens in vertikaler Richtung im wesentlichen übereinander angeordnete Gelenke zusammenklappbar ist. Durch derartige im wesentlichen vertikal übereinander angeordnete Gelenke an den Holmen des Rahmens läßt sich ein einfacher Klapp- und Verschwenkmechanismus sicherstellen, welcher auch entsprechend einfach bedienbar ist. Dadurch, daß die Gelenke an unterschiedlichen Rahmenholmen im wesentlichen vertikal übereinander angeordnet sind, wird darüberhinaus sichergestellt, daß durch einfaches Verschwenken der Rahmenteile zueinander unmittelbar ein Eintreten des üblicherweise kleiner ausgebildeten Vorderrades in den Freiraum der Felge des Hinterrades ermöglicht wird.

Um ein vollständiges Eintauchen der Räder ineinander zu ermöglichen, ist darüberhinaus bevorzugt vorgesehen, daß die Rahmenholme in an sich bekannter Weise im Bereich der Gelenke gekröpft bzw. abgewinkelt ausgebildet sind, wodurch sich eine eng anliegende Position der Rahmenholme in zusammengeklappter Stellung erzielen läßt.

Zur Erzielung einer entsprechend eng anliegenden Position benachbarter Rahmenholme in zusammengeklappter Stellung kann darüberhinaus auch vorgesehen sein, daß die benachbarten Teile der Rahmenholme jeweils gelenkig an einem Zwischenelement angreifen, wobei der Abstand der Gelenkverbindungen des Zwischenelementes an den Rahmenholmen die Hälfte der Summe der Aussenabmessungen der benachbarten Teile der Rahmenholme wenigstens geringfügig übersteigt, wie dies einer weiteren bevorzugten Ausführungsform entspricht.

Allgemein lassen sich derartige Gelenkverbindungen unter Verwendung von einfach betätigbaren Verschlüssen oder Knebelschrauben einfach und rasch lösen und ergeben eine entsprechend einfache und sichere Montage und Verriegelung des Fahrrades in der Betriebsposition.

In besonders bevorzugter Weise kann das erfindungsgemäße Fahrrad dahingehend weitergebildet sein, daß der Rahmen aus einem oberen, starren Rahmenholm, welcher um ein in einer im wesentlichen mittigen Position zwischen den Anlenkachsen der Räder angeordnetes Gelenk verschwenkbar ausgebildet ist, und einem unteren, als Seilzug ausgebildeten Rahmenholm gebildet ist. Dadurch, daß der Rahmen des Fahrrads mit einem oberen, starren Rahmenholm, welcher um ein in einer im wesentlichen mittigen Position zwischen den Anlenkachsen der Räder angeordnetes Gelenk verschwenkbar ausgebildet ist, und einem unteren, als Seilzug ausgebildeten Rahmenholm besteht, ist ein besonders einfaches und rasches Zusammenklappen des Fahrrades in seine zusammengeklappte Position möglich, da lediglich das an dem oberen Rahmenholm vorgesehene Verriegelungselement gelöst werden muß. Durch die Ausbildung des unteren Rahmenholms als biegsamer Seilzug wird darüberhinaus in einfacher Weise eine ausreichende Stabilität, insbesondere Verwindungsstabilität, des Rahmens auch bei hohen Belastungen während dem Fahren sichergestellt, sodaß neben einer Vereinfachung des Zusammenklappmechanismus bzw. Zusammenklappvorganges auch eine deutliche Gewichtseinsparung des Fahrrades erzielt wird.

Alternativ zu Ausführungsformen, bei welchen Rahmenholme durch Vorsehen von Gelenken unterteilt sind und benachbarte Teile der Rahmenholme relativ zueinander verschwenkbar sind, ist gemäß einer abgewandelten Ausführungsform des erfindungsgemäßen Fahrrades vorgesehen, daß der Rahmen aus zwei Rahmenelementen besteht, welche jeweils zwei einen spitzen Winkel miteinander einschließende Rahmenholme aufweisen und welche in an sich bekannter Weise um ein den Sattel aufnehmendes Rahmenrohr relativ zueinander verschwenkbar gelagert sind. Ein derartiger zweiteiliger Rahmen, von welchem ein Teil zur Lagerung des Hinterrades dient und der andere Teil eine Lagerung für das Schaftrohr zur Festlegung des Vorderrades als auch der Lenkstange aufweist, kann in einfacher Weise an dem den Sattel aufnehmenden Rahmenrohr gelagert sein, wobei das den Sattel aufnehmende Rahmenrohr beispielsweise von den jeweils freien Enden der Rahmenteile vollständig umgriffen wird. Durch einfaches Lösen von entsprechenden Verriegelungseinrichtungen läßt sich ein Verschwenken der Rahmenteile um das den Sattel aufnehmende Rahmenrohr erzielen und wiederum eine Aufnahme eines Rades in dem durch die einseitige Lagerung der Räder vorgesehenen Freiraum in der Felge des anderen Rades sicherstellen.

Wie oben bereits angedeutet, wird die Gesamtbreite des Rades in zusammengeklapptem Zustand auch wesentlich von der gegenseitigen Anordnung der zueinander verschwenkbaren Rahmenteile in der zusammengeklappten Stellung bestimmt, wobei in diesem Zusammenhang erfindungsgemäß bevorzugt vorgesehen ist, daß die Rahmenholme in der zusammengeklappten Stellung des Rahmens in einer im wesentlichen parallelen bzw. einander überdeckenden Lage zueinander angeordnet sind. Durch eine derartige im wesentlichen parallele bzw. einander überdeckende Lage der Rahmenholme in zusammengeklapptem Zustand des Fahrrades wird ein vollständiges Eintauchen eines Rades in den Freiraum der Felge des anderen Rades sichergestellt.

Insbesondere bei Verwendung von zwei Rahmenteilen, welche um ein den Sattel aufnehmendes Rahmenrohr relativ zueinander verschwenkbar gelagert sind, ergibt sich aufgrund der Tatsache, daß das den Sattel aufnehmende Rahmenrohr üblicherweise einen Winkel zu der Vertikalen des Rahmens einschließt, das Problem, daß bei einem Verschwenken um dieses relativ zur Vertikalen geneigte Rahmenrohr eine Aufnahme des Vorderrades in dem Freiraum der Felge des Hinterrades und aufgrund der geometrischen Bedingungen beim Verschwenken der Rahmenteile zueinander ein relativ kleines Vorderrad erforderlich machen würde. Um jedoch den gesamten, vom Hinterrad zur Verfügung gestellten Freiraum im wesentlichen ausnutzen zu können und derart auch ein entsprechend groß dimensioniertes Vorderrad einsetzen zu können, ist bevorzugt vorgesehen, daß das das Vorderrad und die Lenkstange tragende Schaftrohr höhenverstellbar am Rahmen gelagert ist. Durch eine derartige Höhenverstellbarkeit des Schaftrohres läßt sich in zusammengeklapptem Zustand in einfacher Weise eine Position für das Vorderrad erzielen, in welcher dieses vollständig in den Freiraum der Felge des Hinterrades eintaucht.

Für eine einfache Verstellung der Lenkstange ist erfindungsgemäß bevorzugt vorgesehen, daß die Lenkstange über einen insbesondere verrastbaren Verschluß am Schaftrohr gelagert ist und in an sich bekannter Weise in zusammengeklappter Stellung des Rahmens in eine mit den Rädern und Rahmenholmen im wesentlichen fluchtende Lage bringbar ist. Durch einen derartigen beispielsweise verrastbaren Verschluß läßt sich in einfacher Weise ohne aufwendige Justierungsarbeiten die für die Betriebsposition des Fahrrades erforderliche Stellung einnehmen und auch eine zusammengeklappte Stellung zur Minimierung der Breite des zusammengeklappten Fahrrades mit den Rädern und Rahmenholmen im wesentlichen fluchtende Lage einnehmen.

Für eine einfache und zuverlässige Verriegelung der zueinander verschwenkbaren oder zusammenklappbaren Rahmenelemente ist erfindungsgemäß bevorzugt vorgesehen, daß in an sich bekannter Weise die zueinander verschwenkbaren Teile der Rahmenholme über Spannverschlüsse sowohl in der Betriebsposition des Fahrrades als auch in zusammengeklappter Stellung des Rahmens verriegelbar sind. Mit einer derartigen Ausbildung läßt sich mit wenigen und einfachen Handgriffen jeweils ein Umbau des Fahrrades von seiner zusammengeklappten Position in die Betriebsposition bzw. umgekehrt vornehmen.

Für eine weitere Verringerung der Breite des Fahrrades in zusammengeklapptem Zustand ist darüberhinaus bevorzugt vorgesehen, daß in an sich bekannter Weise die Pedale in eine der Kurbel anliegende bzw. mit dieser fluchtende Lage verschwenkbar sind.

Für eine Reduktion der Höhe des Fahrrades in zusammengeklappter Position ist vorgesehen, daß der Sattel über einen Gelenkmechanismus aus der Betriebsposition in eine eingeschobene Lage absenkbar ist, wie dies einer weiteren bevorzugten Ausführungsform des erfindungsgemäßen Fahrrades entspricht.

Die Erfindung wird nachfolgend anhand von in den beiliegenden Zeichnungen schematisch dargestellten Ausführungsbeispielen näher erläutert. In diesen zeigen
Fig. 1 eine schematische Seitenansicht eines erfindungsgemäßen Fahrrades;
Fig. 2 in vergrößertem Maßstab eine schematische Draufsicht auf eine Gelenkverbindung zwischen gelenkig aneinander angelenkten Rahmenteilen entsprechend dem Pfeil II der Fig. 1;
Fig. 3 in einer zu Fig. 2 ähnlichen Darstellung eine abgewandelte Ausführungsform der Gelenkverbindung;
Fig. 4 in einer zu den Fig. 2 und 3 wiederum ähnlichen Darstellung eine weitere abgewandelte Ausführungsform einer Gelenkverbindung;
Fig. 5 eine Frontansicht teilweise im Schnitt auf das Fahrrad gemäß Fig. 1 in zusammengeklappter Stellung;
Fig. 6 in einer zu Fig. 1 ähnlichen Seitenansicht eine schematische Darstellung einer abgewandelten Ausführungsform eines erfindungsgemäßen Fahrrades; und
Fig. 7 eine schematische Seitenansicht einer weiteren Ausbildung des erfindungsgemäßen Fahrrades, bei welcher der untere Rahmenholm als Seilzug ausgebildet ist.

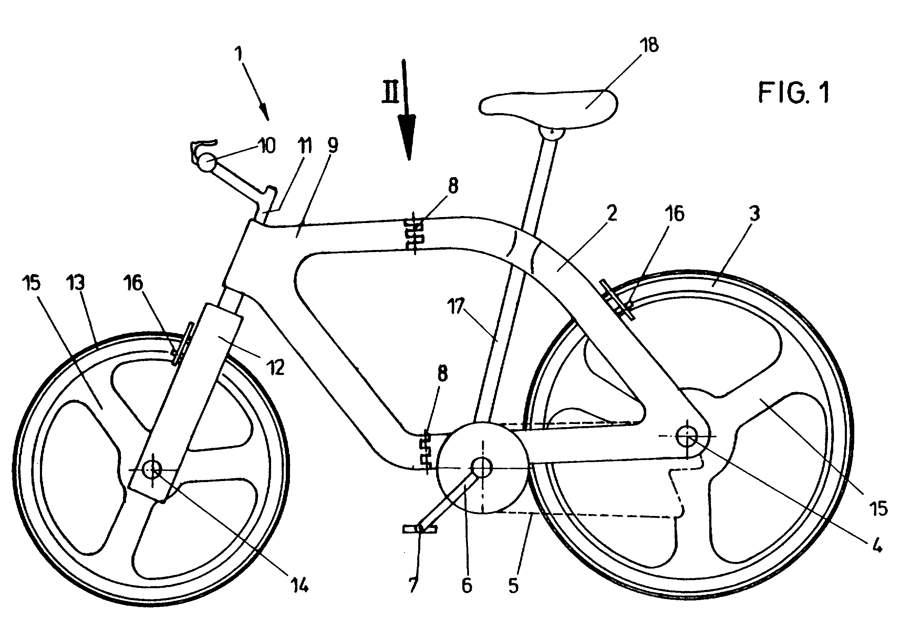

In Fig. 1 ist mit 1 allgemein ein zusammenklappbares Fahrrad bezeichnet, wobei an einem hinteren Rahmenteil 2 ein Hinterrad 3 einseitig um eine Drehachse 4 gelagert ist. Ein an sich bekannter Kettenantrieb ist schematisch mit 5 angedeutet, wobei eine Kurbeleinrichtung 6 mit Pedalen 7 ausgebildet ist. Der hintere Rahmenteil 2 ist über schematisch angedeutete Gelenke 8, welche später noch im Detail beschrieben werden, gelenkig mit einem vorderen Rahmenteil 9 verbunden, an welchem ein eine Lenkstange 10 tragendes Schaftrohr 11 gelagert ist. An dem Schaftrohr 11 ist über einen Arm 12 ein Vorderrad 13 wiederum einseitig um eine Drehachse 14 drehbar gelagert. Um eine auch bei einseitiger Lagerung der Räder ausreichende Stabilität zu erzielen, weisen hiebei sowohl das Vorderrad 13 als auch das Hinterrad 3 verstärkt ausgebildete Speichen 15 auf.

An sich bekannte Bremseinrichtungen sowohl für das Vorderrad 13 als auch für des Hinterrad 3 sind schematisch mit 16 angedeutet. Am hinteren Rahmenteil 2 ist darüberhinaus ein zusätzliches Rahmenrohr 17 vorgesehen, welches zur Aufnahme eines einen Sattel 18 tragenden Sattelrohres dient.

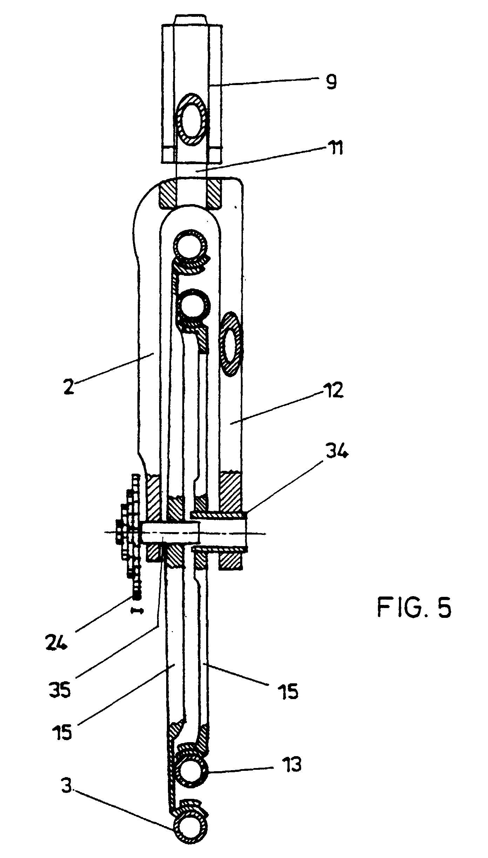

Wie aus Fig. 1 unmittelbar ersichtlich, ist das Vorderrad 13 mit gegenüber dem Hinterrad 3 geringerem Außendurchmesser ausgebildet, sodaß bei einem Verschwenken der Rahmenteile 2 und 9 um die durch die Gelenke 8 definierte, im wesentlichen vertikale Achse das Vorderrad 13 vollkommen im durch die einseitige Lagerung des Hinterrades 3 verbleibenden Freiraum der Felge des Hinterrades 3 aufgenommen werden kann und so eine sehr geringe Breite des Fahrrades in zusammengeklapptem Zustand erzielbar ist, wie dies genauer in Fig. 5 dargestellt ist. Hiebei ist, wie dies in Fig. 1 dargestellt ist, die einseitige Lagerung sowohl des Vorderrades 13 als auch des Hinterrades 3 an der Seite des Fahrrades vorgesehen, an welcher der Kettenantrieb 5 und die dazugehörige Kurbeleinrichtung 6 angeordnet sind.

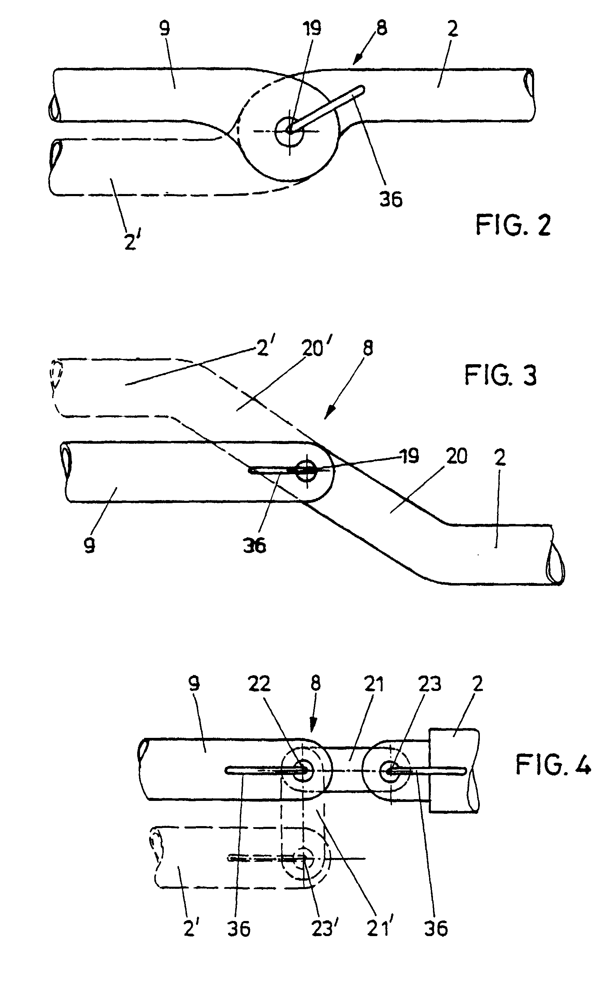

In den Fig. 2 bis 4 sind unterschiedliche Ausführungsformen der allgemein mit 8 bezeichneten Gelenkverbindungen zwischen dem hinteren Rahmenteil 2 und dem vorderen Rahmenteil 9 dargestellt. Hiebei ist in diesen Figuren in durchgezogenen Linien jeweils die Position der Rahmenteile 2 und 9 in Betriebsposition, d.h. Fahrposition, des Fahrrades dargestellt, während strichliert die verschwenkten bzw. um das Gelenk 8 herumgeklappte Position des einen Rahmenteiles 21 dargestellt ist, wobei Spannverschlüsse zur Verriegelung der Rahmenteile 2 und 9 jeweils schematisch mit 35 angedeutet sind.

Bei der Ausbildung gemäß Fig. 2 sind der vordere und der hintere Rahmenteil 9 bzw. 2 um eine Achse 19 schwenkbar miteinander verbunden, wobei in der Betriebsstellung die Rahmenholme bzw. aneinander anschließenden Rahmenteile 2 und 9 im wesentlichen fluchtend miteinander angeordnet sind. In der zusammengeklappten Stellung ist durch die gekröpfte Ausbildung der aneinander anschließende Enden der Rahmenteile 2 und 9 bei einem Verschwenken um die Achse 19 im wesentlichen eine zueinander parallele Lage der Rahmenteile 9 und 2' erzielbar, wodurch sich ein äußerst geringer Platzbedarf in der zusammengeklappten Stellung ergibt.

In der Ausbildung gemäß Fig. 3 sind wiederum aneinander anschließende Rahmenteile 2 und 9 um eine Achse 19 schwenkbar aneinander angelenkt. Durch die Ausbildung des Rahmenteiles 2 mit einem abgewinkelten Ende 20 ergibt sich bei einer Verschwenkung bzw. einem Zusammenklappen um die Achse 19 eine im wesentlichen zueinander parallele Lage der Holme bzw. Rahmenteile 9 und 2'.

Bei der weiteren abgewandelten Ausführungsform des Gelenkes 8 gemäß Fig. 4 sind die aneinander anschließenden Rahmenteile über ein Zwischenelement 21 miteinander gekoppelt, wobei das Zwischenelement 21 um Achsen 22 und 23 schwenkbar an den aneinander anschließenden Rahmenteilen 2 und 9 angelenkt ist. Bei einem Verschwenken des einen Rahmenteiles in die mit 2' bezeichnete Lage gelangen die Rahmenteile 2' und 9 wiederum in eine im wesentlichen parallele Lage, wobei zu diesem Zweck die Länge bzw. die Abmessungen des Zwischenelementes 21 entsprechend auf die Abmessungen der Rahmenteile 2 und 9 abgestimmt sein müssen.

Bei sämtlichen der in den Fig. 2 bis 4 beispielhaft dargestellten Gelenkverbindungen finden entsprechende Spann- bzw. Knebelverschlüsse 36 Verwendung, welche eine einfache Lagefixierung der Rahmenteile 2 und 9 sowohl der Betriebsposition als auch in zusammengeklappter Stellung ermöglichen.

Bei der Darstellung gemäß Fig. 5 ist ersichtlich, wie in der zusammengeklappten Stellung das Vorderrad 13 vollständig vom Hinterrad 3 umgriffen wird, da durch die einseitige Lagerung der Räder am hinteren Rahmenteil 2 bzw. am Arm 12 des Schaftrohres 12 sowie durch die ebenfalls einseitige Anordnung der verstärkten Speichen 15 ein entsprechender Freiraum im Hinterrad 3 geschaffen wird. Um ein möglichst enges Anliegen der Räder 3 und 13 zu ermöglichen, ist die Lagerung des Vorderrades 13 als Hohlwelle 34 und jene des Hinterrades 3 als Lager 35 ausgebildet. In Fig. 5 ist zusätzlich mit 24 der Kettenantrieb angedeutet, wobei die Position der ebenfalls in eine mit den zusammengeklappten Rahmenteilen im wesentlichen fluchtende Lage gebrachten Lenkstange sowie des Sattels in Fig. 5 nicht dargestellt ist.

Es ist unmittelbar ersichtlich, daß durch die Aufnahme des Vorderrades 13 im durch die einseitige Lagerung der Räder geschaffenen Freiraum der Felge des Hinterrades 3 und durch die spezielle Ausbildung der Lagerung der beiden Räder 3 und 13 eine sehr geringe Breite des Fahrrades in zusammengeklapptem Zustand erzielbar ist, wobei die Außenabmessungen im wesentlichen durch die von der zentralen Mittellinie des Fahrrades einseitig vorragenden Rahmenteiles bzw. Arme 2 und 12 für die Lagerung der Räder 3 bzw. 13 bestimmt werden.

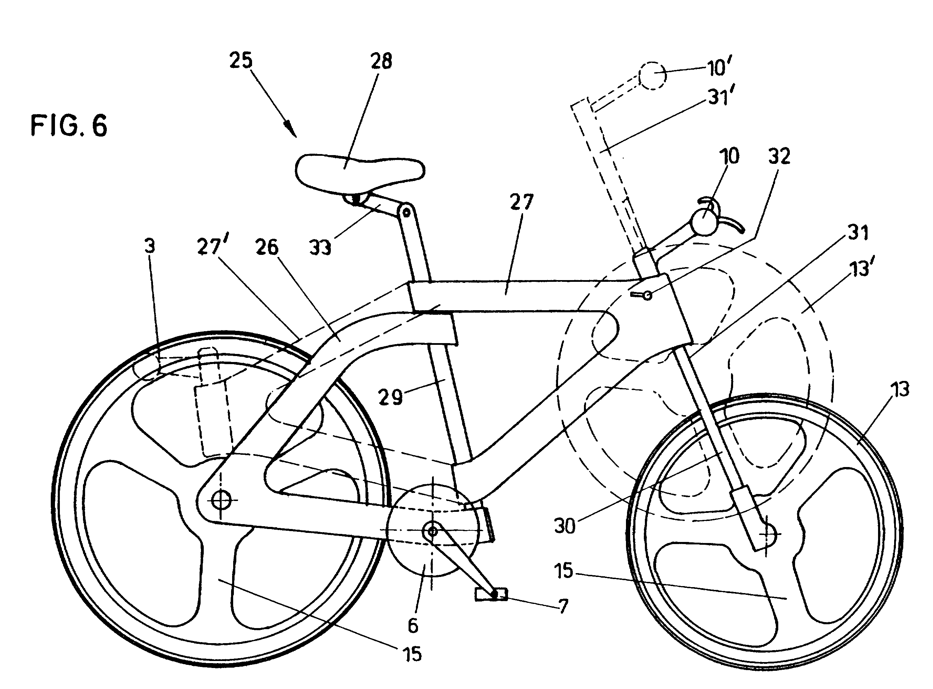

In Fig. 6 ist eine abgewandelte Ausführungsform eines Fahrrades 25 dargestellt, wobei zwei Rahmenteile 26 und 27, welche jeweils aus zwei einen spitzen Winkel miteinander einschließenden Rahmenholmen bestehen, um ein den Sattel 28 aufnehmendes Rahmenrohr 29 verschwenkbar ausgebildet sind. Hiebei umgreifen beispielsweise die freien Enden der Holme der Rahmenteile 26 und 27 jeweils das Rahmenrohr 29. Wie bei den vorangehenden Ausführungsformen ist auch bei dieser Ausbildung sowohl das Hinterrad 3 als auch das Vorderrad 13 einseitig am hinteren Rahmenteil 26 bzw. an einem Arm 30 des Schaftrohres 31 angelenkt. Die Räder weisen hiebei wiederum verstärkt ausgebildete Speichen 15 auf.

Um auch bei dieser Ausführungsform gemäß Fig. 6 bei einem Verschwenken der Rahmenteile 26 und 27 zueinander um die durch das Rahmenrohr 29 definierte und einen Winkel mit der Vertikalen einschließende Achse ein gegenseitiges Übergreifen der Räder 3 und 13 zu ermöglichen, ist zusätzlich eine Höhenverstellbarkeit des Schaftrohres 31 im vorderen Rahmenteil 27 vorgesehen, wobei zu diesem Zweck ein einfacher Verschluß mit 32 angedeutet ist. Es wird somit für ein Zusammenklappen der Verschluß 32 gelöst und das Schaftrohr 31 mit der Lenkstange 10 gemeinsam mit dem Vorderrad 13 in die strichliert dargestellte Position 31' angehoben, worauf bei einem Verschwenken des vorderen Rahmenteiles 27 relativ zum hinteren Rahmenteil 26 um die geneigte Achse, welche durch das Rahmenrohr 29 definiert wird, der vordere Rahmenteil in die strichliert mit 27' bezeichnete Position gelangt und das Vorderrad 13 wiederum vollständig in den durch die einseitige Lagerung des Hinterrades 3 vorgesehenen Freiraum aufgenommen wird und somit wiederum eine sehr geringe Breite des Fahrrades in zusammengeklappter Stellung erzielt wird, wie dies in Fig. 5 angedeutet ist.

Zusätzlich ist bei dieser Ausführungsform der Sattel 28 über einen Gelenkmechanismus 33 verschwenkbar gelagert, um in zusammengeklappter Stellung des Fahrrades zur Reduktion der Gesamthöhe abgesenkt werden zu können.

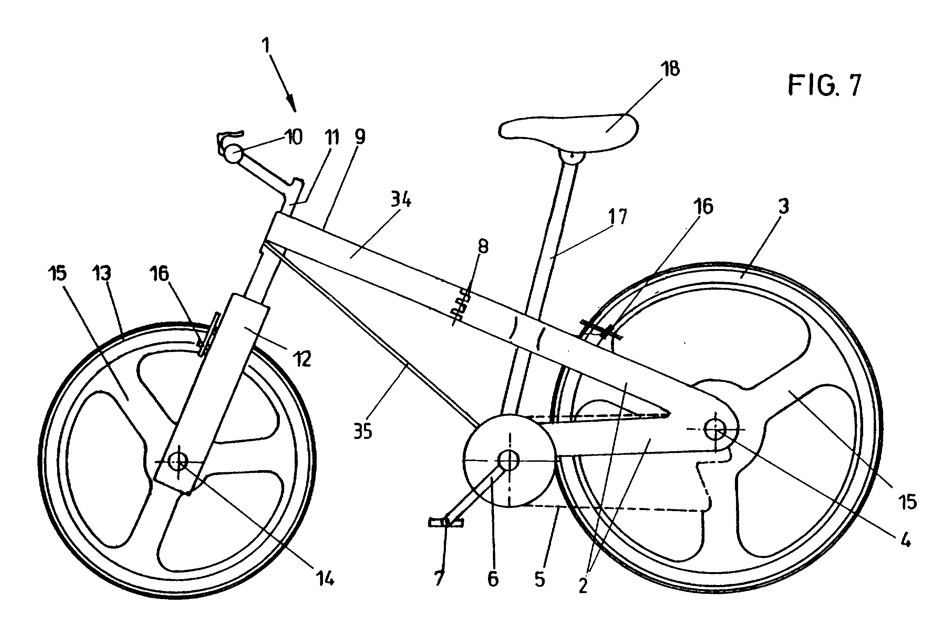

Bei der weiteren abgewandelten Ausführungsform gemäß Fig. 7 eines Fahrrades sind die Bezugszeichen von Fig. 1 weitgehend beibehalten, wobei der Rahmen des Fahrrades 1 aus den vorderen bzw. hinteren Rahmenteilen 9 bzw. 2 besteht, wobei der hintere Rahmenteil starr ausgebildet ist und der vordere Rahmenteil 9 in einen oberen Rahmenholm 34, welcher in einer im wesentlichen mittigen Position zwischen den Anlenkachsen 4 bzw. 14 an den Rädern 3 bzw. 13 des Fahrrades angeordnetes Gelenk 8 aufweist, und einen unteren Rahmenholm 35 unterteilt ist. Der untere Rahmenholm 35 ist hiebei aus einem Seilzug aus biegsamem Material, insbesondere von einem Stahlseil, gebildet, sodaß das Vorsehen eines Gelenkes für das Verschwenken des Fahrrades in seine zusammengeklappte Position in dem unteren Rahmenholm 35 nicht erforderlich ist. Der Seilzug 35 ist hiebei ausreichend biegsam, um in die zusammengeklappte Position des Fahrrades verschwenkt bzw. gebogen zu werden, und gleichzeitig ausreichend straff bzw. fest gespannt angeordnet, um dem Rahmen des Fahrrades 1 eine ausreichende Stabilität, insbesondere Verwindungssteifigkeit, zu verleihen, selbst wenn das Fahrrad 1 stark belastet wird. Um eine ausreichende Festigkeit und Stabilität des Rahmens zu gewährleisten, ist der Seilzug 35 an dem hinteren Rahmenteil 2 bzw. an dem vorderen Rahmenteil 9 im Bereich der Lagerung des Schaftrohres 11, welches eine Lenkstange 10 trägt, verschweißt.

## Patentansprüche

1. Fahrrad mit an einem Rahmen gelagerten Vorder- und Hinterrad, wobei der Rahmen zusammenklappbar ist, wobei in der zusammengeklappten Stellung die Längsabmessungen des Fahrrades gegenüber der Betriebsposition verringert sind und wobei das Hinterrad einseitig am Rahmen und das Vorderrad einseitig an einem das Lenkrad tragenden, am Rahmen drehbar gelagerten Schaftrohr gelagert sind, dadurch gekennzeichnet, daß die Räder (3, 13) in an sich bekannter Weise unterschiedliche Durchmesser aufweisen, wobei das Rad (13) mit kleinerem Durchmesser in zusammengeklappter Stellung des Rahmens (2, 9) in das Rad (3) mit größerem Durchmesser eintaucht.

2. Fahrrad nach Anspruch 1, dadurch gekennzeichnet, daß in an sich bekannter Weise die Räder (3, 13) über an der der einseitigen Lagerung am Rahmen (2, 9, 26, 27) zugewandten Seite an der Felge angreifende, verstärkt ausgebildete Speichen (15) an der Drehachse (4, 14) gelagert sind.

3. Fahrrad nach Anspruch 1 oder 2, dadurch gekennzeichnet, daß das Hinterrad (3) und das Vorderrad (13) an der Seite der Anordnung der Antriebskette (5) am Rahmen (2, 9, 26, 27) einseitig gelagert sind.

4. Fahrrad nach Anspruch 1, 2 oder 3, dadurch gekennzeichnet, daß in an sich bekannter Weise eines der Räder (13) eine von einer Hohlwelle (34) gebildete Lagerung aufweist, in welche in zusammengeklapptem Zustand des Fahrrades (1) die Lagerung (35) des anderen Rades (3) eintaucht.

5. Fahrrad nach einem der Ansprüche 1 bis 4, dadurch gekennzeichnet, daß in an sich bekannter Weise der Rahmen (2, 9) um in einer im wesentlichen mittigen Position zwischen den Anlenkachsen (4, 14) der Räder (3, 13) an den Holmen des Rahmens (2, 9) in vertikaler Richtung im wesentlichen übereinander angeordnete Gelenke (8) zusammenklappbar ist.

6. Fahrrad nach Anspruch 5, dadurch gekennzeichnet, daß die Rahmenholme (2, 9) in an sich bekannter Weise im Bereich der Gelenke (8) gekröpft bzw. abgewinkelt ausgebildet sind.

7. Fahrrad nach Anspruch 5, dadurch gekennzeichnet, daß die benachbarten Teile der Rahmenholme (2, 9) jeweils gelenkig an einem Zwischenelement (21) angreifen, wobei der Abstand der Gelenkverbindungen des Zwischenelementes (21) an dem Rahmenholmen (2, 9) die Hälfte der Summe der Außenabmessungen der benachbarten Teile der Rahmenholme (2, 9) wenigstens geringfügig übersteigt.

8. Fahrrad nach einem der Ansprüche 1 bis 4, dadurch gekennzeichnet,daß der Rahmen aus zwei Rahmenelementen (26, 27) besteht, welche jeweils zwei einen spitzen Winkel miteinander einschließende Rahmenholme aufweisen und welche in an sich bekannter Weise um ein den Sattel (28) aufnehmendes Rahmenrohr (29) relativ zueinander verschwenkbar gelagert sind.

9. Fahrrad nach einem der Ansprüche 1 bis 8, dadurch gekennzeichnet, daß die Rahmenholme (2, 9, 26, 27) in der zusammengeklappten Stellung des Rahmens in einer im wesentlichen parallelen bzw. einander überdeckenden Lage zueinander angeordnet sind.

10. Fahrrad nach einem der Ansprüche 1 bis 4, dadurch gekennzeichnet, daß der Rahmen (2, 9) aus einem oberen, starren Rahmenholm (34), welcher um ein in einer im wesentlichen mittigen Position zwischen den Anlenkachsen (4, 14) der Räder (3, 13) angeordnetes Gelenk (8) verschwenkbar ausgebildet ist, und eine unteren, als Seilzug ausgebildeten Rahmenholm (35) gebildet ist.

11. Fahrrad nach einem der Ansprüche 1 bis 10, dadurch gekennzeichnet, daß das das Vorderrad (13) und die Lenkstange (10) tragende Schaftrohr (31) höhenverstellbar am Rahmen (27) gelagert ist.

12. Fahrrad nach einem der Ansprüche 1 bis 11, dadurch gekennzeichnet, daß die Lenkstange (10) über einen insbesondere verrastbaren Verschluß am Schaftrohr (11, 31) gelagert ist und in an sich bekannter Weise in zusammengeklappter Stellung des Rahmens in eine mit den Rädern (3, 13) und Rahmenholmen (2, 9, 26, 27) im wesentlichen fluchtende Lage bringbar ist.

13. Fahrrad nach einem der Ansprüche 1 bis 12, dadurch gekennzeichnet, daß in an sich bekannter Weise die zueinander verschwenkbaren Teile der Rahmenholme (2, 9, 26, 27) über Spannverschlüsse (36) sowohl in der Betriebsposition des Fahrrades (1) als auch in zusammengeklappter Stellung des Rahmens verriegelbar sind.

14. Fahrrad nach einem der Ansprüche 1 bis 13, dadurch gekennzeichnet, daß in an sich bekannter Weise die Pedale (7) in eine der Kurbel (6) anliegende bzw. mit dieser fluchtende Lage verschwenkbar sind.

15. Fahrrad nach einem der Ansprüche 1 bis 14, dadurch gekennzeichnet, daß der Sattel (28) über einen Gelenkmechanismus (33) aus der Betriebsposition in eine eingeschobene Lage absenkbar ist.

## Claims

1. Bicycle with a front wheel and back wheel attached to a frame, wherein the frame is collapsible or foldable, wherein in the collapsed or folded position the length dimensions of the bicycle are reduced as compared with the working state and wherein the back wheel is unilaterally fitted onto the frame and the front wheel is unilaterally fitted to the tube bearing the handlebar which is rotatably attached to the frame, characterized in that the wheels (3, 13) have, in a manner known per se, differing diameters, wherein the wheel (13) with the smaller diameter in the folded position of the frame (2, 9) is embedded into the wheel (3) with the larger diameter.

2. Bicycle according to claim 1, characterized in that the wheels (3, 13) are supported by stronger spokes (15) engaging the rim (4, 14) at the side which is located on the frame (2, 9, 26, 27) with the unilateral or one-sided support.

3. Bicycle according to claim 1 or 2, characterized in that the back wheel (3) and the front wheel (13) are unilaterally mounted on the frame (2, 9, 26, 27) on the side of the chain (5).

4. Bicycle according to claim 1, 2 or 3, characterized in that in a manner known per se one of the wheels (13) has a bearing formed by a hollow shaft (34), in which in the folded position of the bicycle (1) the bearing (35) of the other wheel (3) is embedded.

5. Bicycle according to any of the claims 1 to 4, characterized in that the frame (2, 9) is foldable around an essentially central position between the steering axles (4, 14) of the wheels (3, 13) on the tubes of the frame (2, 9) in vertical direction by means of hinges (8) essentially positioned one on top of the other.

6. Bicycle according to claim 5, characterized in that in a manner known per se the frame tubes (2, 9) are bent or angled in the area of the hinges (8).

7. Bicycle according to claim 5, characterized in that the neighboring parts of the frame tubes (2, 9) are correspondingly moveably attached to an intermediate element (21), characterized in that the distance of the hinge connections of the intermediate element (21) at the frame tubes (2, 9) at least minimally exceeds half of the sum of the outer dimensions of the neighboring parts of the frame tubes (2, 9).

8. Bicycle according to any of the claims 1 to 4, characterized in that the frame consists of two frame elements (26, 27), each of which forming a sharp angle, and which are turnably fitted around a frame tube (29) bearing the saddle (28).

9. Bicycle according to any of the claims 1 to 8, characterized in that the frame tubes (2, 9, 26, 27) are essentially in a parallel position or respectively in a position in which one covers the other in the folded position.

10. Bicycle according to any of the claims 1 to 4, characterized in that the frame (2, 9) comprises an upper, rigid frame tube (34), which is turnable around a hinge (8), which is in a nearly centered position between the pivot axles (4, 14) of the wheels (3, 13), and a lower frame element (35) which is designed as a rope.

11. Bicycle according to any of the claims 1 to 10 (31), characterized in that the shaft tube (31) bearing the front wheel (13) and the handlebar (10) is height adjustably attached to the frame (27).

12. Bicycle according to any of the claims 1 to 11, characterized in that the handlebar (10) is attached to the shaft tube (11, 31) by means of a locking or latching device and, in a manner known per se, is moveable in an aligned position with the wheels (3, 13) and the frame tubes (2, 9, 26, 27) in the folded position of the frame.

13. Bicycle according to any of the claims 1 to 12, characterized in that, in a manner known per se, the parts of the frame tubes (2, 9, 26, 27) pivotable towards each other can be fastened by means of jigs (36) both in the operating position of the bicycle (1) and in the folded position of the frame.

14. Bicycle according to any of the claims 1 to 13, characterized in that, in a manner known per se, the pedals (7) are pivotable into a position being adjacent to or aligned with the crank (6).

15. Bicycle according to any of the claims 1 to 14, characterized in that the saddle (28) can be lowered from the operating position to a pulled-in position by means of a hinge mechanism (33).

## Revendications

1. Vélo avec une roue avant et une roue arrière montées sur un cadre, le cadre étant pliable, les dimensions longitudinales du vélo étant réduites dans la position de pliage par rapport à la position de service, la roue arrière étant montée sur un côté sur le cadre et la roue avant étant montée sur un côté sur un tube supportant le volant et logé avec une possibilité de rotation sur le cadre, caractérisé en ce que les roues (3, 13) présentent des diamètres différents de manière connue en soi, la roue (13) de diamètre inférieur plongeant, en position de pliage du cadre (2, 9), dans la roue (3) de diamètre supérieur.

2. Vélo suivant la revendication 1, caractérisé en ce que, de manière connue en soi, les roues (3, 13) sont montées sur l'axe de rotation (4, 14) par l'intermédiaire de rayons (15) renforcés, attaquant la jante sur le côté tourné vers le montage unilatéral sur le cadre (2, 9, 26, 27).

3. Vélo suivant l'une des revendications 1 et 2, caractérisé en ce que la roue arrière (3) et la roue avant (13) sont montées unilatéralement sur le cadre (2, 9, 26, 27) sur le côté du montage de la chaîne d'entraînement (5).

4. Vélo suivant l'une des revendications 1, 2 et 3, caractérisé en ce que, de manière connue en soi, l'une des roues (13) présente un support formé par un arbre creux (34), dans lequel plonge le support (35) de l'autre roue (3) à l'état de pliage du vélo (1).

5. Vélo suivant l'une des revendications 1 à 4, caractérisé en ce que, de manière connue en soi, le cadre (2, 9) est pliable autour d'articulations (8) disposées essentiellement au-dessus l'une de l'autre dans le sens vertical sur les longerons du cadre (2, 9), dans une position essentiellement centrale entre les axes d'articulation (4, 14) des roues (3, 13).

6. Vélo suivant la revendication 5, caractérisé en ce que les longerons (2, 9) ont de manière connue en soi une réalisation coudée et/ou pliée dans la zone des articulations (8).

7. Vélo suivant la revendication 5, caractérisé en ce que les parties adjacentes des longerons (2, 9), respectivement articulées, attaquent un élément intermédiaire (21), l'écartement des assemblages articulés de l'élément intermédiaire (21) sur les longerons (2, 9) dépassant, au moins légèrement, la moitié de la somme des dimensions externes des parties adjacentes des longerons (2, 9).

8. Vélo suivant l'une des revendications 1 à 4, caractérisé en ce que le cadre se compose de deux éléments de cadre (26, 27), qui présentent respectivement deux longerons formant entre eux un angle aigu, et qui sont montés de manière connue en soi, avec une possibilité de pivotement l'un par rapport à l'autre, autour d'un tube de cadre (29) recevant la selle (28).

9. Vélo suivant l'une des revendications 1 à 8, caractérisé en ce que les longerons (2, 9, 26, 27), dans la position de pliage du cadre, sont disposés l'un par rapport à l'autre dans une position essentiellement parallèle et/ou de recouvrement mutuel.

10. Vélo suivant l'une des revendications 1 à 4, caractérisé en ce que le cadre (2, 9) est formé d'un longeron supérieur rigide (34), qui est réalisé avec une possibilité de pivotement autour d'une articulation (8), disposée dans une position essentiellement centrale entre les axes d'articulation (4, 14) des roues (3, 13), et d'un longeron inférieur (35) réalisé sous forme de câble.

11. Vélo suivant l'une des revendications 1 à 10, caractérisé en ce que le tube (31), supportant la roue avant (13) et le guidon (10), est monté avec une possibilité de réglage en hauteur sur le cadre (27).

12. Vélo suivant l'une des revendications 1 à 11, caractérisé en ce que le guidon (10) est monté sur le tube (11, 31) par l'intermédiaire d'une fermeture en particulier enclenchable et peut être amené de manière connue en soi, en position de pliage du cadre, dans une position essentiellement alignée sur les roues (3, 13) et sur les longerons (2, 9, 26, 27).

13. Vélo suivant l'une des revendications 1 à 12, caractérisé en ce que, de manière connue en soi, les parties mutuellement pivotantes des longerons (2, 9, 26, 27) peuvent être verrouillées par l'intermédiaire de fermetures à genouillère (36), aussi bien dans la position de service du vélo (1) que dans la position de pliage du cadre.

14. Vélo suivant l'une des revendications 1 à 13, caractérisé en ce que la pédale (7) peut pivoter, de manière connue en soi, dans une position s'appliquant sur la manivelle (6) et/ou alignée sur cette dernière.

15. Vélo suivant l'une des revendications 1 à 14, caractérisé en ce que la selle (28) peut être abaissée, par l'intermédiaire d'un mécanisme d'articulation (33), de la position de service dans une position d'escamotage.
